**Europäisches Patentamt**

**European Patent Office**

**Office européen des brevets**

(19)

(11) Veröffentlichungsnummer : **0 347 750 B1**

(12)

# EUROPÄISCHE PATENTSCHRIFT

(45) Veröffentlichungstag der Patentschrift :
**27.05.92 Patentblatt 92/22**

(51) Int. Cl.$^5$ : **F16F 13/00, F16F 9/46, F16F 9/44**

(21) Anmeldenummer : **89110870.6**

(22) Anmeldetag : **15.06.89**

(54) **Aktives, hydraulisch dämpfendes Motorlager.**

(30) Priorität : **20.06.88 DE 3820818**

(43) Veröffentlichungstag der Anmeldung :
**27.12.89 Patentblatt 89/52**

(45) Bekanntmachung des Hinweises auf die
Patenterteilung :
**27.05.92 Patentblatt 92/22**

(84) Benannte Vertragsstaaten :
**DE GB IT**

(56) Entgegenhaltungen :
**EP-A- 0 209 883
DE-A- 3 336 965
DE-A- 3 506 047**

(56) Entgegenhaltungen :
**DE-A- 3 731 024
PATENT ABSTRACTS OF JAPAN, Band 10, Nr.
14 (M-447)[2071], 21. Januar 1986; & JP-A-60
175 834 (HONDA GIKEN KOGYO K.K.)10-09-85**

(73) Patentinhaber : **METZELER GIMETALL AG
Gneisenaustrasse 15
W-8000 München 50 (DE)**

(72) Erfinder : **Sauer, Wolfgang, Dr.
Im Gebück 3a
W-5412 Ransbach (DE)**

(74) Vertreter : **Michelis, Theodor, Dipl.-Ing. et al
Seibert + Michelis Rechtsanwälte und
Patentanwälte Tattenbachstrasse 9
W-8000 München 22 (DE)**

EP 0 347 750 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

**Beschreibung**

Die Erfindung bezieht sich auf ein aktives, hydraulisch dämpfendes Motorlager, das eine Arbeitskammer und eine Ausgleichskammer aufweist, die zumindest teilweise von gummielastischen Umfangswänden umgeben und durch eine starre Zwischenplatte mit einem Überströmkanal voneinander getrennt sind und zumindest teilweise elektroviskose Flüssigkeit als Arbeitsmedium enthalten wobei in einer zentralen Durchgangsbohrung der Zwischenplatte eine kreisscheibenförmige, massive Entleoppelungsplatte in allen Richtungen begrenzt beweglich gelagert ist, um einen überströmspalt zu bilden.

Ein derartiges Motorlager ist aus der DE-A-3731024 bekannt. Dabei wird durch Erzeugen eines elektrischen Feldes im Überströmkanal zwischen zwei Elektroden die Viskosität der elektroviskosen Flüssigkeit geändert, um damit eine Änderung der Dämpfung in schneller Anpassung an die jeweiligen Betriebszustände zu gewährleisten.

Der vorliegenden Erfindung liegt demgegenüber die Aufgabe zugrunde, in Weiterbildung dieses Dämpfungsprinzips das Federungs- und Dämpfungsvermögen des Motorlagers in Abhängigkeit ständig wechselnder Fahrzustände noch optimaler einzustellen und insbesondere hochfrequente Schwingungen und damit das akustische Übertragungsverhalten des Lagers noch besser abstimmen zu können.

Zur Lösung dieser Aufgabe ist daher erfindungsgemäß vorgesehen, daß der Überströmkanal jeweils an seinen Austrittsöffnungen zur Arbeitskammer und zur Ausgleichskam mer mit je einer gummielastischen Wandung abgeschlossen und mit einer gegenüber dem Hauptmedium des Motorlagers niederviskosen Flüssigkeit gefüllt ist, und daß, der Durchmesser der Entkopplungsplatte kleiner als der der Bohrung der Zwisdrenplatte ist und daß die den Spalt begrenzenden Wandungen als Elektroden zum Anlegen einer Hochspannung ausgebildet sind.

Da in herkömmlichen Überströmkanälen hinreichend großer Länge ein tatsächlicher Flüssigkeitsaustausch nur in einem sehr begrenzten Maße stattfindet und stattdessen die in dem Überströmkanal enthaltene Flüssigkeitsmenge lediglich zu einer viskositätsabhängig reibungsbehafteten Schwingung und damit zu einer Wirkung als Tilgermasse angeregt wird, ist es auch möglich, die Flüssigkeitsmenge dieses Kanals so von den übrigen Flüssigkeitsräumen abzutrennen, daß dennoch Schwingungen dieser Flüssigkeitssäule nicht behindert werden, daß aber andererseits mit einem Medium niedrigerer Viskosität als der des Hauptmediums im Lager eine Abstimmung auf ganz spezielle Frequenzen erreicht werden kann. Durch die Ausbildung des eigentlichen Überströmspaltes an der Randfläche einer schwingenden Masse und Beeinflussung der Viskosität der diesen Spalt durchströmenden Flüssigkeit ist damit die Federsteifigkeit dieses Schwingungssystems beeinflußbar, um in jedem Fahrzustand eine optimale Isolation akustischer Schwingungen zu erreichen.

Zweckmäßig ist es dabei, wenn die Bohrungswandung, die auf Erdpotential liegende Elektrode und der Außenumfang der Entkopplungsplatte die an die Spannungsquelle angeschlossene Elektrode bilden.

Zur Erzeugung des gewünschten elektrischen Feldes kann dabei eine Gleichspannungsquelle vorgesehen sein.

Von besonderem Vorteil ist es aber, wenn eine eine Wechselspannung mit einer Frequenz größer als 0,1 Hz erzeugende Spannungsquelle vorgesehen ist, wobei sich für diese Wechselspannungsquelle insbesondere die Zündspule des Kraftfahrzeugs eignet. Dabei kann die an den Elektroden anliegende Spannung in Abhängigkeit von der Motordrehzahl änderbar sein.

Zweckmäßigerweise ist die Entkopplungsplatte auf Ober- und Unterseite mittels eines Käfigs zur axialen Wegbegrenzung am Herausfallen gesichert. Dabei können auf der Entkopplungsplatte zusätzliche Massen angeordnet sein, um ihre Tilgerwirkung zu verstärken.

Für eine optimale Auslegung des Lagers sollte das Verhältnis von Durchmesser d der Entkopplungsplatte zu Breite s des Überströmspaltes zwischen 10 und 100 liegen, so wie das Verhältnis von Durchmesser d der Entkopplungsplatte zu Höhe h des Überströmspaltes zwischen 10 und 200.

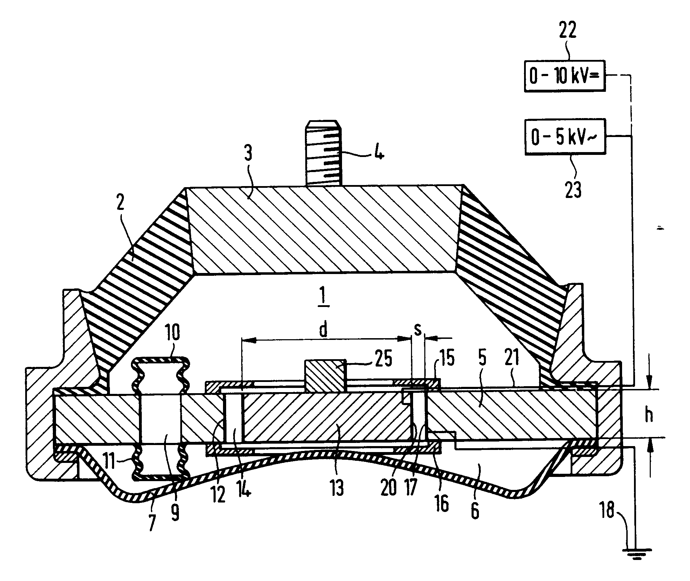

Anhand einer schematischen Zeichnung sind Aufbau und Funktionsweise eines Motorlagers nach der Erfindung näher erläutert. Dabei zeigt die einzige Figur einen Längsschnitt durch ein derartiges Lager mit den entsprechenden Hochspannungsanschlüssen.

Wie aus der Zeichnung zu ersehen ist, weist das Motorlager in herkömmlicher Weise eine Arbeitskammer 1 auf, die durch eine gummielastische Wandung 2 an die die Lagerplatte 3 mit dem Haltebolzen 4 zur Aufnahme des nicht näher dargestellten Motors anvulkanisiert und durch die starre Zwischenplatte 5 begrenzt ist. Auf der anderen Seite der Zwischenplatte befindet sich die Ausgleichskammer 6, die von einer weiteren gummielastischen, sehr volumennachgiebigen Wandung 7 berandet wird.

In der Zwischenplatte 5 ist zunächst ein herkömmlicher Überströmkanal 9 angeordnet, der nur schematisch angedeutet ist und tatsächlich auch als hinreichend langer, wendelförmiger Kanal ausgebildet sein kann. Dieser Überströmkanal ist auf seiner Austrittsseite zur Arbeitskammer 1 und auf seiner Austrittsseite zur Ausgleichskammer 6 mit je einer gummielastischen, vorzugsweise faltenbalgförmigen Wandung 10 bzw. 11

EP 0 347 750 B1

abgeschlossen. Dieser Kanal 9 ist mit einer niedrigviskosen Flüssigkeit gefüllt, um das Lager als hochfrequent abgestimmt arbeitendes Motorlager einstellen zu können. Dies wird durch die Verwendung einer niederviskosen Flüssigkeit erreicht, die bei in die Arbeitskammer 1 eingeleiteten Schwingungen und deren praktisch ungedämpften Weitergabe über die faltenbalgförmige Wandung 10 an die Flüssigkeit zu Schwingungen mit relativ geringer Reibungsdämpfung angeregt wird und damit als eine auf ein bestimmtes Frequenzspektrum abgestimmte Tilgermasse wirkt.

Die Zwischenplatte 5 weist darüber hinaus eine zentrale Bohrung 12 auf, in der eine starre Entkopplungsplatte 13 mit dem Außendurchmesser d freischwingend, d.h. in allen Richtungen begreuzt beweglich gelagert ist. Zwischen der Wandung der Bohrung 12 und dem Außenumfang der Entkopplungsplatte 13 wird somit ein Ringspalt 14 von der Breite s und der Höhe h gebildet, deren Zuordnung für eine funktionsgerechte Auslegung folgenden Bedingungen genügen sollte:

$$10 \leq \frac{d}{s} \leq 100 \text{ sowie } 10 \leq \frac{d}{h} \leq 200$$

Um dabei ein Herausfallen der Entkopplungsplatte 13 aus der Bohrung 12 zu verhindern, ist diese durch einen Käfig bzw. 16 auf Ober- und Unterseite der Zwischenplatte 5 gesichert.

Die Wandungen des Spaltes 14 sind nunmehr als Elektroden zum Erzeugen eines elektrischen Hochspannungsfeldes ausgebildet und zwar bildet die Innenwandung der Bohrung 12 die Elektrode 17, die auf Erdpotential 18 liegt, während der Außenumfang der Entkopplungsplatte 13 als Hochspannungselektrode 20 über eine Leitung 21 an eine Gleichspannungsquelle 22 oder aber an eine Wechselspannungsquelle 23 angeschlossen ist. Die Wechselspannungsquelle 23 erzeugt dabei zweckmäßigerweise eine Spannung mit einer Frequenz von größer als 0,1 Hz, wofür vorzugsweise die nicht näher dargestellte Zündspule des Kraftfahrzeuges verwendet wird.

Arbeitskammer 1 und Ausgleichskammer 6 des Motorlagers sind nunmehr mit einer elektroviskosen Flüssigkeit gefüllt, deren Viskosität beim Durchströmen durch den Spalt 14 durch Erzeugen eines entsprechenden elektrischen Feldes wesentlich erhöht werden kann - bis zum vollständigen Unterbinden eines Flüssigkeitsaustausches.

Wird nun die Entkopplungsplatte 13 durch in der Arbeitskammer 1 wechselnde Druckkräfte zu Schwingungen angeregt und der Ringspalt 14 oszillatorisch und unter Scherbeanspruchung durchströmt, kann die axiale freie Beweglichkeit der Entkopplungsplatte 13 durch Verstärken des elektrischen Feldes und damit Änderung der Zähigkeit der elektroviskosen Flüssigkeit behindert werden.

Die Entkopplungsplatte 13 kann darüber hinaus noch zusätzlich mit Massen 25 belegt werden, um damit ihre Til gerwirkung als gegenschwingendes Feder-Masse-System zu verstärken. Die Federsteifigkeit dieses Systems entsteht und wird bewirkt durch die an der Entkopplungsplatte angreifenden Spannungen der scherbeanspruchten Ringspaltströmung. Der Betrag der Schubspannung wird über die Viskosität der elektroviskosen Flüssigkeit durch das an den Elektroden anliegende Gleich- oder Wechselspannungsfeld beeinflußt, das beispielsweise in Abhängigkeit von der Motordrehzahl verändert werden kann, um somit in jedem Fahrzustand eine optimale Isolation akustischer Schwingungen zu erreichen.

Die Entkopplungsplatte 13 weist selbstverständlich noch entsprechende, nicht näher dargestellte Führungen und Isolationen auf, um ein Anstreifen an der Gegenelektrode und damit einen Kurzschluß des Systems zu vermeiden.

Insgesamt ergibt sich also ein Motorlager, bei dem durch Verwendung einer niederviskosen Flüssigkeit die Flüssigkeitssäule im Überströmkanal bei Schwingungsanregung phasenverschoben zur Anregung schwingt, wodurch hohe Dämpfung im niederfrequenten Bereich mit Verlustwinkelmaxima zwischen 6 und 12 Hz und Reynoldszahlen sehr viel größer 1 erreicht werden, da bei diesen Flüssigkeiten der Trägheitseffekt der Flüssigkeitssäule ohne hohen Reibungsanteil überwiegt und damit sich eine hohe Eigenfrequenz der schwingenden Flüssigkeitsmenge ergibt.

Damit wird also im wesentlichen verhindert, daß sich Motorstuckern auf die Fahrgastzelle überträgt. Gleichzeitig wird die Entkopplungsplatte durch Anlegen des Hochspannungsfeldes festgehalten. Bei kleineren Anregungsamplituden wird dagegen das Lager "weich" geschaltet, wobei sich die Entkopplungsplatte unter dem Einfluß des stufenlos verstellbaren Spannungsfeldes bewegen kann, um damit eine Isolation akustischer Schwingungen in unmittelbarer Anpassung an den jeweiligen Betriebszustand und die Frequenz der Störquelle zu erreichen.

**Patentansprüche**

1. Aktives, hydraulisch dämpfendes Motorlager, das eine Arbeitskammer (1) und eine Ausgleichskammer (6) aufweist, die zumindest teilweise von gummielastischen Umfangswänden (2, 7) umgeben und durch eine

3

starre Zwischenplatte (5) ,mit einem Überströmkanal (9) voneinander getrennt sind und zumindest teilweise elektroviskose Flüssigkeit als Arbeitsmedium enthalten, wobei in einer zentralen Durchgangsbohrung (12) der Zwischenplatte (5) eine kreisscheibenförmige, massive Entkopplungsplatte (13) in allen Richtungen begrenzt beweglich gelagert ist, um einen Überströmspalt (14) zu bilden, dadurch gekennzeichnet, daß der Überströmkanal (9) jeweils an seinen Austrittsöffnungen zur Arbeitskammer (1) und zur Ausgleichskammer (6) mit je einer gummielastischen Wandung (10, 11) abgeschlossen und mit einer gegenüber dem Hauptmedium des Motorlagers niederviskosen Flüssigkeit gefüllt ist, und daß der Durchmesser d der Entkoppelungsplatte (13) kleiner als der der Bohrung (12) der Zwischenplatte (5) ist, und daß die den Spalt (14) begrenzenden Wandungen als Elektroden (17, 20) zum Anlegen einer Hochspannung ausgebildet sind.

2. Aktives Motrlager nach Anspruch 1, dadurch gekennzeichnet, daß die Bohrungswandung (12) die auf Erdpotential (18) liegende Elektrode (17) und der Außenumfang der Entkopplungsplatte (13) die an die Spannungsquelle (22; 23) angeschlossene Elektrode (20) bilden.

3. Aktives Motorlager nach Anspruch 2, dadurch gekennzeichnet, daß eine eine Wechselspannung mit einer Frequenz größer als 0,1 Hz erzeugende Spannungsquelle (23) vorgesehen ist.

4. Aktives Motorlager nach Anspruch 3, dadurch gekennzeichnet, daß als Wechselspannungsquelle die Zündspule des Kraftfahrzeugs vorgesehen ist.

5. Aktives Motorlager nach Anspruch 3 oder 4, dadurch gekennzeichnet, daß die an den Elektroden anliegende Spannung in Abhängigkeit von der Motordrehzahl änderbar ist.

6. Aktives Motorlager nach Anspruch 2, dadurch gekennzeichnet, daß eine Gleichspannungsquelle (22) vorgesehen ist.

7. Aktives Motorlager nach Anspruch 1, dadurch gekennzeichnet, daß die Entkopplungsplatte (13) auf Oberund Unterseite mittels eines Käfigs (15, 16) zur axialen Wegbegrenzung gesichert ist.

8. Aktives Motorlager nach Anspruch 1, dadurch gekennzeichnet, daß auf der Entkopplungsplatte (13) zusätzliche Massen (25) angeordnet sind.

9. Akives Motorlager nach Anspruch 1, dadurch gekennzeichnet, daß die den Überströmkanal (9) absperrenden Wandungen als gummielastische Faltenbälge (10, 11) ausgebildet sind.

10. Aktives Motorlager nach Anspruch 1, dadurch gekennzeichnet, daß das Verhältnis von Durchmesser d der Entkopplungsplatte (13) zur Breite s des Überströmspaltes (14) zwischen 10 und 100 liegt.

11. Aktives Motorlager nach Anspruch 1, dadurch gekennzeichnet, daß das Verhältnis von Durchmesser (d) der Entkopplungsplatte (13) und Höhe h des Überströmspaltes (14) zwischen 10 und 200 liegt.


## Claims

1. An active, hydraulically damping engine mount comprising an operating chamber (1) and a compensating chamber (6), which are at least partially surrounded by rubber-elastic peripheral walls (2, 7), are separated from one another by a rigid intermediate plate (5) having an overflow duct (9) and at least partially contain electroviscous fluid as an operating medium, a circular disc-shaped solid decoupling plate (13) being mounted in a central through bore (12) of the intermediate plate (5) so as to have limited movement in all directions in order to form an overflow gap (14), characterised in that the overflow duct (9) is sealed at its outflow openings into the operating chamber (1) and the compensating chamber (6) in each case by means of a rubber-elastic wall (10, 11) and is filled with a fluid having a low viscosity relative to the main medium of the engine mount, the diameter of the decoupling plate (13) is smaller than the bore (12) of the intermediate plate (5), and the walls defining the gap (14) are designed as electrodes (17, 20) for applying a high voltage.

2. An active engine mount according to claim 1, characterised in that the bore wall (12) forms the electrode (17) connected to earth potential (18) and the outer circumference of the decoupling plate (13) forms the electrode (20) connected to the voltage source (22; 23).

3. An active engine mount according to claim 2, characterised in that a voltage source (23) is provided generating an a.c. voltage having a frequency greater than 0.1 Hz.

4. An active engine mount according to claim 3, characterised in that the ignition coil of the motor vehicle is provided as an a.c. voltage source.

5. An active engine mount according to claim 3 or 4, characterised in that the voltage applied to the electrodes is variable as a function of the rotational speed of the engine.

6. An active engine mount according to claim 2, characterised in that a d.c. voltage source (22) is provided.

7. An active engine mount according to claim 1, characterised in that, in order to limit its axial movement, the decoupling plate (13) is secured on its upper and lower surfaces by means of a cage (15, 16).

8. An active engine mount according to claim 1, characterised in that additional masses (25) are arranged on the decoupling plate (13).

9. An active engine mount according to claim 1, characterised in that the walls defining the overflow duct (9) are designed as rubber-elastic bellows.

10. An active engine mount according to claim 1, characterised in that the ratio of the diameter d of the decoupling plate (13) to the width s of the overflow gap (14) is between 10 and 100.

11. An active engine mount according to claim 1, characterised in that the ratio of the diameter (d) of the decoupling plate (13) to the height h of the overflow gap (14) is between 10 and 200.

**Revendications**

1. Support actif à amortissement hydraulique pour moteur, qui comporte une chambre de travail (1) et une chambre de compensation (6), qui sont entourées au moins en partie par des parois circonférentielles (2,7) présentant l'élasticité du caoutchouc et sont séparées l'une de l'autre par une plaque intercalaire rigide (5) comportant un canal de trop-plein (9) et contiennent au moins en partie un fluide électro-visqueux en tant que fluide de travail, et dans lequel une plaque massive de découplage en forme de disque circulaire (13) est montée dans un perçage traversant central (12) de la plaque intercalaire (5) avec une mobilité limitée dans toutes les directions de manière à former une fente de trop-plein (14), caractérisé par le fait que le canal de trop-plein (9) est fermé, respectivement au niveau de ses ouvertures de sortie en direction de la chambre de travail (11) et en direction de la chambre de compensation (6), rar une paroi (10,11) présentant l'élasticité du caoutchouc et est rempli par un liquide faiblement visqueux par rapport au milieu principal du support pour moteur, et que le diamètre d de la plaque de découplage (13) est inférieur à celui du perçage (12) ménagé dans la plaque intercalaire (5), et que les parois, qui limitent la fente (14), sont réalisées sous la forme d'électrodes (17,20) servant à appliquer une haute tension.

2. Support actif pour moteur suivant la revendication 1, caractérisé par le fait que la paroi (12) du perçage forme l'électrode (17) placée au potentiel de terre (18), et que le pourtour extérieur de la plaque de découplage (13) forme l'électrode (20) raccordée à la source de tension (22;23).

3. Support actif pour moteur suivant la revendication 2, caractérisé par le fait qu'il est prévu une source de tension (23) produisant une tension alternative ayant une fréquence supérieure à 0,1 Hz.

4. Support actif pour moteur suivant la revendication 3, caractérisé par le fait qu'il est prévu, comme source de tension alternative, la bobine d'allumage du véhicule automobile.

5. Support actif pour moteur suivant la revendication 3 ou 4, caractérisé par le fait que la tension appliquée aux électrodes peut être modifiée en fonction de la vitesse de rotation du moteur.

6. Support actif pour moteur suivant la revendication 2, caractérisé par le fait qu'il est prévu une source de tension continue (22).

7. Support actif pour moteur suivant la revendication 1, caractérisé par le fait que la plaque de découplage (13) est bloquée, sur sa face supérieure et sur sa face inférieure, à l'aide d'une cage (15,16) de manière à limiter le déplacement axial.

8. Support actif pour moteur suivant la revendication 1, caractérisé par le fait que des masses supplémentaires (25) sont disposées sur la plaque de découplage (13).

9. Support actif pour moteur suivant la revendication 1, caractérisé par le fait que les parois, qui ferment le canal de trop-plein (9), sont agencées sous la forme de soufflets présentant l'élasticité du caoutchouc.

10. Support actif pour moteur suivant la revendication 1, caractérisé par le fait que le rapport du diamètre d de la plaque de découplage (13) à la largeur s de la fente de trop-plein (14) est compris entre 10 et 100.

11. Support actif pour moteur suivant la revendication 1, caractérisé par le fait que le rapport du diamètre (d) de la plaque de découplage (13) à la hauteur h de la fente de trop-plein (14) est compris entre 10 et 200.